# FASCICULE DE BREVET EUROPEEN

(11) **EP 2 229 049 B1**
(45) Date de publication et mention de la délivrance du brevet: **17.07.2013**
(21) Numéro de dépôt: 08869680.2
(22) Date de dépôt: 30.12.2008
(51) Int. Cl.: A01K 11/00

(54) **BOUCLE AURICULAIRE DE MARQUAGE FAVORISANT LA CICATRISATION**
HEILUNGSFÖRDERNDER MARKIERUNGSOHRRING
HEALING-PROMOTING MARKING AURICULAR RING

(30) Priorité: 08.01.2008 FR 0800087
(43) Date de publication de la demande: 22.09.2010
(73) Titulaire: Allflex Europe Sas, 35502 Vitré Cedex (FR)
(72) Inventeur: HILPERT, Jean-Jacques, F-35500 Vitre (FR); LEMAIRE, Emmanuel, F-02390 Mont d'Origny (FR)
(74) Mandataire: Ravina, Bernard
(86) Numéro de dépôt international: PCT/EP2008/068350
(87) Numéro de publication internationale: WO 2009/087070

(56) Documents cités:
- FR-A- 2 578 713
- US-A- 4 646 455
- US-A- 4 696 119

## Description

La présente invention est du domaine du marquage et de l'identification des animaux, et plus particulièrement des étiquettes auriculaires pour le bétail.

Elle a pour objet une étiquette auriculaire comportant un système de fixation par un bouton et une tige emboîtées qui comporte des ouvertures d'aération permettant une cicatrisation améliorée du point d'insertion dans l'oreille de l'animal.

L'identification des animaux d'élevage a été rendue obligatoire dans de nombreux pays pour assurer le suivi sanitaire du cheptel et garantir la traçabilité des produits proposés aux consommateurs. Ce marquage concerne aussi bien les bovins que les ovins, les porcins ou les caprins. La marque comporte généralement un numéro d'identification inscrit sur deux étiquettes qui sont fixées aux deux oreilles de l'animal, ce qui permettra de les suivre tout au long de leur existence. La crise due à la maladie de la vache folle et ses suites catastrophiques pour le secteur de la viande bovine ont plus encore mis en évidence l'importance d'un système de marquage et d'enregistrement efficace.

Les marques auriculaires en matière plastique sont actuellement les plus utilisées. Elles comprennent une boucle de fixation sur laquelle sont mentionnées toutes les données légales par impression, gravure, code barre ou autre moyen connu le l'homme de l'art. Elles sont conçues pour être posées de manière irréversible, à l'aide d'un système de fixation inviolable, par exemple un bouton de réception associé à une tige par emboîtement irréversible. Leur inviolabilité résulte notamment de l'impossibilité de détacher la boucle mâle de la boucle femelle sans détruire l'une des deux. Cet impératif est généralement assurée par l'emploi d'une boucle dont la tête de la partie femelle est une coque fermée. Cette fermeture présente, en revanche, un inconvénient : lors de la pose de la boucle, un petit morceau de chair peut rester prisonnier dans la tête femelle fermée, et entraîner une infection. De nombreuses variantes ont été proposées, visant à améliorer la solidité et l'inviolabilité du système de fixation de la boucle, à faciliter sa pose à travers le cartilage de l'oreille et l'identification des données portées par l'étiquette, ou encore à en réduire les coûts de fabrication.

Elles doivent être apposées alors que l'animal est encore jeune et fragile (pour les veaux par exemple, l'opération doit être faite avant l'âge de sept jours) et en tout cas avant la commercialisation de l'animal. Plusieurs critères doivent être respectés : la façon de poser la boucle, la place dans l'oreille et les conditions de cicatrisation sont des points essentiels pour une bonne tenue de la marque, ainsi que pour le confort et la santé de l'animal.

Face à cette exigence, il a été proposé des boucles comportant des trous d'aération au niveau de la tête. Par exemple FR 2 550 915 décrit une boucle d'identification comportant un capuchon de protection qui doit être rompu pour désolidariser la partie mâle de la partie femelle. Ce capuchon peut présenter un petit trou d'aération afin d'augmenter les performances d'hygiène de la boucle. La demande FR 2 818 091 décrit une étiquette conçue pour limiter les fraudes tout en conservant un risque d'infection réduit, dans laquelle la partie femelle comporte un bossage creux coaxial au trou accueillant la partie mâle, comprenant à son extrémité libre des tenons délimitant des ouvertures de dimensions réduites qui permettent de conserver une circulation d'air. Le document US 4, 646, 455 décrit une boucle auriculaire de marquage et d'identification du bétail conforme au préambule de la revendication 1.

Cependant, la taille de ces ouvertures, réduite du fait de la priorité donnée à la lutte contre la fraude, n'est pas de nature à apporter une amélioration sensible de la cicatrisation au point d'insertion. En outre, même si les boucles sont conçues de manière à ce que la tige pivote librement dans le bouton de réception, l'espace ménagé entre les pièces est très mince afin d'assurer leur blocage irréversible. En effet, le jeu prévu entre la tige mâle et le bouton femelle ne permet qu'un pivotement des pièces entre elles en les maintenant plaquées de part et d'autre de l'oreille, pour éviter que des objets tels que fils de fer, ficelle ou branchage, ne s'y accrochent et ne provoquent l'arrachement. De ce fait, la partie de la boucle qui est ouverte vers l'atmosphère est séparée de l'oreille de l'animal par le dispositif de blocage. La surface de la boucle au contact de l'oreille constitue donc une zone confinée peu propice à un assèchement des tissus et à une cicatrisation rapide.

Or, en accord avec la directive européenne 1760/2000, tous les animaux doivent porter deux boucles en permanence, afin que même en cas de perte ou de dégradation d'une étiquette, le suivi du marquage soit assuré. De ce fait les coûts et le temps consacrés au marquage et au remplacement des étiquettes perdues ou abîmées, ainsi qu'à la surveillance et aux soins apportés aux animaux après la pose des étiquettes, s'est accru de manière significative, ce qui implique un effort important pour les éleveurs. L'utilisation de marques auriculaires permettant une pose correcte des boucles assortie d'une cicatrisation rapide et complète apparaît désormais comme une nécessité sanitaire et économique.

L'invention remédie à ce problème en proposant une boucle de marquage auriculaire pour le bétail comportant des ouvertures selon une conformation permettant une circulation d'air à proximité immédiate de la zone de percement, et assurant un ventilation continue qui favorise la cicatrisation de l'oreille. En choisissant une technique de marquage qui prend en considération les risques d'infection et de formation d'abcès, on améliore l'état sanitaire dans l'élevage et on réduit en même temps les risques de souffrance pour les animaux.

Plus précisément, la présente invention a pour objet une boucle auriculaire de marquage et d'identification du bétail suivant la revendication 1.

La boucle auriculaire conforme à l'invention est du type associant principalement une partie mâle et une partie femelle selon un mode quelconque connu de la technique. La partie mâle peut par exemple comprendre une tige terminée par une pointe, la partie femelle consistant quant à elle en un bouton de réception présentant un pertuis et une cavité pour l'introduction de la pointe de la tige, le pertuis débouchant dans la cavité en formant un épaulement de retenue de la pointe après son introduction. En général, les diamètres respectifs du pertuis et de la cavité sont tels que la tige pivote librement dans la partie femelle. La partie mâle peut ainsi être fixée à la partie femelle par emboîtement irréversible à l'aide d'une pince qui permet d'abord de percer l'oreille de l'animal puis d'enfoncer la pointe de la tige dans le bouton de réception. Les boucles sont habituellement fabriquées à partir de matière plastique moulée, mais peuvent également être réalisées en aluminium, en laiton ou en acier.

Le bouton, formé de la tête et d'une plage circulaire, rappelle par sa silhouette générale un chapeau à bords, cette comparaison ne présumant pas de sa structure interne. De manière connue, la tête du bouton adopte une forme essentiellement cylindrique ou tronconique, sa base pouvant être plus large que son sommet, ce qui adoucit ses formes et améliore sa solidité. La plage circulaire est globalement plane avec une bordure arrondie pour ne pas provoquer de blessures. Elle est dans un plan sensiblement perpendiculaire à l'axe de la tête, de manière que lorsque la boucle est installée dans l'oreille de l'animal, ladite plage vient en appui contre l'oreille sur toute sa surface, empêchant le retrait de la boucle. Une autre fonction essentielle de cette plage est de porter un ou des codes d'identification de l'animal.

Bien que la présente invention soit particulièrement adaptée à des boutons auriculaires dont la plage circulaire est utilisée pour l'inscription ou l'insertion d'un code, accessoirement et de manière connue, la boucle peut être prolongée par une plaquette faisant fonction d'étiquette.

Selon l'invention, au moins deux perforations sont ménagées sur la plage du bouton de réception, de manière à mettre en relation la face inférieure de la plage, et donc la surface de l'oreille se trouvant sous la boucle, avec l'atmosphère. Ces ouvertures peuvent adopter une géométrie quelconque, à condition de traverser en totalité la plage. Elles peuvent par exemple être de section ronde, carrée, trapézoïdale, en arc de cercle ou autre, de dimension uniforme ou évasée, et traversent commodément la plage à angle droit, ou en biais si souhaité. Elles assurent une aération de l'oreille sous le bouton et favorisent une évolution saine du point d'insertion de la tige mâle.

Selon une caractéristique préférée, la plage circulaire de la boucle auriculaire selon l'invention comporte au moins quatre perforations, et de préférence encore au moins six perforations. Il est en effet recherché une aération maximum de la zone cicatricielle.

Selon une caractéristique intéressante de la boucle auriculaire objet de l'invention, les perforations sont réparties à intervalles réguliers sur la plage circulaire. On limite ainsi les points de fragilité liés à une trop grande proximité des perforations qui pourrait conduire à créer une ligne de rupture.

Selon l'invention, les perforations sont pratiquées à l'aplomb de la base de la tête. De cette manière les orifices sont disposés au plus près de la zone cicatricielle lui assurant une aération optimale.

Selon un mode de réalisation avantageux, les perforations ont un orifice qui s'étend radialement sur environ un tiers de la plage à partir de la base de la tête. On obtient de la sorte un bon compromis entre efficacité d'aération et robustesse de la plage circulaire de la boucle.

De manière préférée, les orifices des perforations ont une surface cumulée d'au moins 3% par rapport à la surface de la face inférieure de la plage, destinée à être en contact avec l'oreille de l'animal. De manière particulièrement préféré, lesdits orifices occupent au moins 5% de la surface de contact de la plage avec l'oreille de l'animal. Il a en effet été constaté qu'une taille des perforations offrant une surface d'échange avec l'air atmosphérique de l'ordre de 3% au moins, permet d'obtenir un assèchement satisfaisant de la surface de l'oreille sous la plage et une bonne cicatrisation autour de la tige de la partie mâle. On atteint un résultat optimal autour de 5% de surface d'échange, étant donné que pour des valeurs supérieures des cas de détérioration sont à craindre, qui remettraient en cause l'efficacité du dispositif.

Pour améliorer encore l'aération de la zone auriculaire confinée sous la boucle, d'autres ouvertures peuvent être prévues au niveau de la tête. Ainsi, dans la boucle auriculaire selon l'invention, la tête du bouton peut comporter au moins une ouverture mettant la cavité en relation directe avec l'atmosphère extérieure.

Ladite ouverture peut adopter la forme d'une fente. Selon une caractéristique préférée de la boucle auriculaire selon l'invention, la tête comporte deux ou trois fentes équidistantes orientées parallèlement à l'axe de la tête.

Ces fentes sont pratiquées dans la paroi de la tête du bouton qui sépare la cavité de réception de l'atmosphère. Une ouverture allongée et de faible largeur permet de préserver la rigidité de l'étiquette qui doit rester inviolable, tout en offrant une bonne prise d'air. Il est bien entendu que ces ouvertures sont distinctes du pertuis accueillant la tige mâle, qui n'est de toute façon pas en relation directe avec l'atmosphère, mais au contraire qui est en contact avec les tissus de l'oreille de l'animal. Grâce à ces ouvertures, l'air atmosphérique peut circuler via la cavité et l'orifice du bouton jusqu'à la zone de percement de l'oreille et éviter l'accumulation des liquides de suintement de la plaie comme de la peau, en permettant leur écoulement et/ou leur évaporation.

Selon une caractéristique avantageuse de la boucle auriculaire selon l'invention, la paroi interne de la tête du bouton présente un évidement à proximité de chacune des dites fentes, de manière à accroître le volume d'air présent dans la cavité. Une simple réduction de l'épaisseur de la paroi de la tête du bouton de part et d'autre des fentes est un moyen simple et efficace de créer un tel évidemment.

Selon un mode de réalisation intéressant de la boucle auriculaire selon l'invention, ledit bouton est constitué de deux coques assemblées l'une sur l'autre comportant le même nombre de perforations placées au même endroit sur la plage circulaire. Les perforations doivent donc être réalisées avant assemblage des deux coques, ce qui étant donné la taille réduite des boucles et la précision requise pour que les orifices coïncident exactement, implique d'avoir recours à des technologies avancées pour positionner correctement les deux demis coques l'une par rapport à l'autre, sans que les coût de productions n'atteignent des niveaux dissuasifs. Un assemblage manuel étant économiquement exclu, les techniques dites de vision industrielle peuvent ici être utilement mises en oeuvre.

Dans tous les cas, il est recommandé que les surfaces placées en vis-à-vis adoptent une forme complémentaire favorisant leur contact. En effet, la zone de contact entre la coque supérieure et inférieure permet de les fixer ensemble, par exemple par collage ou par soudage par ultrasons. Tout autre moyen d'assemblage, tel le clipsage, peut également être utilisé s'il répond aux impératifs de solidité et de précision requis.

Selon un mode de réalisation alternatif de la boucle auriculaire selon l'invention, le bouton est constitué d'une pièce unique moulée d'un seul tenant.

Dans un mode de réalisation avantageux de la boucle auriculaire selon l'invention, la plage circulaire comprend en outre des moyens de support d'un code d'identification d'un animal. Peuvent y être mentionnées toutes les données légales par impression, gravure, code barre ou autre moyen connu de l'homme de l'art, permettant l'identification de l'animal. Les moyens de support d'un code peuvent aussi consister en des moyens électroniques d'identification, tels un transpondeur électronique (dit RFID), logé par exemple dans un espace prévu à cet effet entre les deux coques constituant la pièce femelle, ou obtenu par surmoulage dans cette pièce.

Ainsi, grâce au dispositif de marquage conforme à l'invention comportant une ou plusieurs ouvertures à différents niveaux du bouton de fixation, on favorise une bonne aération de la plaie provoquée dans l'oreille de l'animal par le passage du poinçon de la partie mâle, sans affaiblir la rigidité et la robustesse du bouton, ni permettre l'expulsion en force de la partie mâle ou autre manipulation visant à falsifier les données portées par la boucle.

La présente invention sera mieux comprise, et des détails en relevant apparaîtront, à la lumière de la description qui va en être faite, dans différentes variantes de réalisation, en relation avec les figures des planches annexées, dans lesquelles :
La figure 1 est une vue de dessus de la partie femelle d'un bouton auriculaire selon l'invention ;
La figure 2 présente une vue en coupe de la partie femelle d'un bouton auriculaire selon l'invention.

Les exemples illustrés ici sont réalisés à partir de types de boutons auriculaires connus, en y apportant les modifications conformes à l'invention.

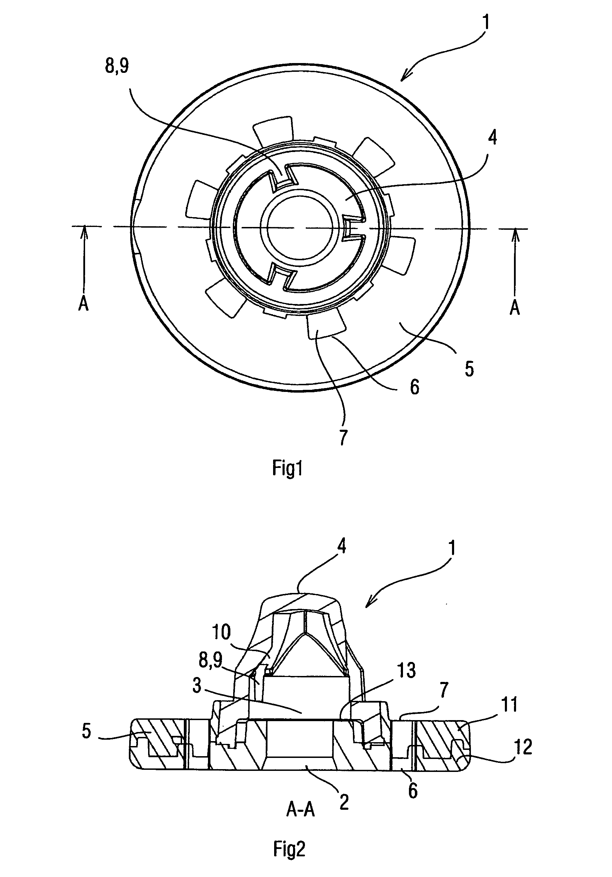

Sur les figures 1 et 2, est représentée la partie femelle d'une boucle auriculaire destinée à l'identification et au marquage d'un animal. Une boucle sera formée en associant cette partie femelle et une partie mâle (non représentée) qui comprend une tige et une pointe, par emboîtement irréversible. La partie femelle comprend le bouton 1 dans lequel sont ménagés le pertuis 2 et la cavité 3.

Lors de la mise en place de la boucle auriculaire par un opérateur, la pointe traverse l'oreille de l'animal, puis s'engage dans le pertuis 2 pour pénétrer dans la cavité 3 du bouton 1. Une fois la boucle posée, la pointe est logée dans la cavité 3, et y est maintenue par l'épaulement de retenue 13 réalisant la transition entre la cavité 3 et le pertuis 2. Le diamètre de la pointe est légèrement inférieur à celui de la cavité 3, et de même le diamètre de la tige 3 est un peu inférieur à celui du pertuis 2, de sorte que la partie mâle et la partie femelle peuvent effectuer des mouvements de rotation l'un par rapport à l'autre.

La tête 4 du bouton 1 adopte une forme tronconique, sa base étant plus large que son sommet. La plage circulaire 5, globalement plane, s'étend à partir de la base de la tête 4, dans un plan perpendiculaire à l'axe de celle-ci. Elle comporte six perforations 6 mettant en relation la face inférieure de la plage 5 -- et donc la surface de l'oreille se trouvant sous la boucle -- avec l'atmosphère. Les perforations 6 ont une section trapézoïdale et sont de dimension uniforme dans toute l'épaisseur de la plage 5 qu'elles traversent à angle droit. Elles sont réparties à intervalles réguliers à l'aplomb de la base de la tête 4. Elles s'étendent radialement sur environ un tiers de la plage 5 à partir de la base de la tête 4, de sorte qu'elles occupent environ 5% de la surface de contact de la plage 5 avec l'oreille de l'animal.

Le bouton 1 est constitué des deux coques 11, 12 assemblées l'une sur l'autre comportant le même nombre de perforations 6 placées au même endroit sur la plage circulaire 5 et positionnées correctement l'une par rapport à l'autre au moment de l'assemblage, pour que les perforations coïncident exactement. La plage 5 peut comporter des moyens d'identification, tels que par exemple une plaquette de marquage (non représentée ici), une gravure, ou un transpondeur RFID logé entre les coques 11 et 12.

Dans le mode de réalisation présenté ici, plusieurs ouvertures 8 sont pratiquées dans la paroi de la tête 4 du bouton 1 qui sépare la cavité de réception 3 de l'atmosphère. Ces ouvertures adoptent la forme de trois fentes 9 orientées axialement et réparties de manière équidistante. La paroi interne de la tête 4 du bouton 1 présente l'évidement 10 à proximité de chacune des fentes 9, ledit évidemment étant créé par une épaisseur réduite de la paroi du bouton 4 de part et d'autre des fentes 9.

Les différentes ouvertures décrites, pratiquées dans la tête 4 et la plage 5 du bouton 1, mettent l'oreille de l'animal en relation directe avec l'atmosphère extérieure. Les autres caractéristiques géométriques ou physiques de la boucle auriculaire de marquage restent telles que mises en oeuvre dans les réalisations antérieures connues et dont certaines ont été décrites en détail, notamment dans les brevets de la déposante (voir par exemple les brevets français FR 2 879 399, FR 2 845 564, ou la demande FR 05 10448).

## Revendications

1. Boucle auriculaire de marquage et d'identification du bétail, associant à une partie mâle, une partie femelle consistant en un bouton (1) présentant un pertuis (2) et une cavité (3) pour recevoir la partie mâle, ledit bouton comprenant une tête (4) essentiellement cylindrique ou tronconique et une plage circulaire (5) s'étendant dans un plan sensiblement perpendiculaire à l'axe de la tête depuis la base de celle-ci, le boucle étant **caractérisée en ce que** la plage (5) du bouton de réception (1) comporte au moins deux perforations (6) pratiquées à l'aplomb de la base de la tête (4), mettant en relation la face inférieure de ladite plage avec l'atmosphère.

2. Boucle auriculaire selon la revendication 1, **caractérisée en ce que** la plage circulaire (5) comporte au moins quatre perforations (6), et de préférence au moins six perforatic ns (6).

3. Boucle auriculaire selon la revendication 1 ou 2, **caractérisée en ce que** les perforations (6) sont réparties à intervalle régulier sur la plage circulaire (5).

4. Boucle auriculaire selon l'une des revendications précédentes, **caractérisée en ce que** les perforations (6) ont un orifice (7) qui s'étend radialement sur environ un tiers de la plage (5) à partir de la base de la tête (4).

5. Boucle auriculaire selon l'une des revendications précédentes, **caractérisée en ce que** les orifices (7) des perforations (6) ont une surface cumulée d'au moins 3%, et de préférence d'au moins 5%, par rapport à la surface de la face inférieure de la plage (5) destinée à être en contact avec l'oreille de l'animal.

6. Boucle auriculaire selon l'une des revendications précédentes, **caractérisée en ce que** la tête (4) du bouton (1) comporte en outre au moins une ouverture (8) mettant la cavité (3) en relation directe avec l'atmosphère extérieure.

7. Boucle auriculaire selon la revendication précédente **caractérisée en ce que** la tête (4) du bouton (1) comporte deux ou trois fentes (9) équidistantes orientées parallèlement à l'axe de la tête (4).

8. Boucle auriculaire selon la revendication précédente **caractérisée en ce que** la paroi interne de la tête (4) du bouton (1) présente un évidement (10) à proximité de chacune des dites fentes de manière à accroître le volume d'air présent dans la cavité.

9. Boucle auriculaire selon l'une quelconque des revendications 1 à 8 **caractérisée en ce que** le bouton (1) est constitué de deux coques (11, 12) assemblées l'une sur l'autre comportant le même nombre de perforations (6) placées aux mêmes endroits sur la plage circulaire (5).

10. Boucle auriculaire selon l'une quelconque des revendications 1 à 8 **caractérisée en ce que** le bouton (1) est constitué d'une pièce unique moulée d'un seul tenant.

11. Boucle auriculaire selon l'une des revendications précédentes **caractérisée en ce que** la plage circulaire (5) comprend en outre des moyens de support d'un code d'identification d'un animal.

12. Boucle auriculaire selon l'une des revendications précédentes, **caractérisée en ce qu'**elle contient un transpondeur électronique (RFID).

## Patentansprüche

1. Ohrmarke zur Markierung und Kennzeichnung von Nutztieren, zusammengesetzt aus einem Einsteckteil und aus einem Aufnahmeteil, welches aus einem Knopf (1) besteht, der einen Durchlass (2) und einen Hohlraum (3) zur Aufnahme des Einsteckteils aufweist, wobei der Knopf eine im Wesentlichen zylindrische oder kegelstumpfförmige Spitze (4) umfasst sowie einen kreisförmigen Bereich (5), der sich ausgehend von der Basis der Spitze in einer Ebene erstreckt, welche im Wesentlichen rechtwinklig zu dieser ist, wobei die Marke **dadurch gekennzeichnet ist, dass** der Bereich (5) des Aufnahmeknopfes (1) mindestens zwei Durchbohrungen (6) aufweist, die in unmittelbarer Nähe zur Basis der Spitze (4) vorgenommen wurden, sodass die Unterseite des Bereichs der Umgebungsluft ausgesetzt ist.

2. Ohrmarke nach Anspruch 1, **dadurch gekennzeichnet, dass** der kreisförmige Bereich (5) mindestens vier Durchbohrungen (6) aufweist, und vorzugsweise mindestens sechs Durchbohrungen (6).

3. Ohrmarke nach Anspruch 1 oder 2, **dadurch gekennzeichnet, dass** die Durchbohrungen (6) in regelmäßigen Abständen auf dem kreisförmigen Bereich (5) angeordnet sind.

4. Ohrmarke nach einem der vorhergehenden Ansprüche, **dadurch gekennzeichnet, dass** die Durchbohrungen (6) eine Öffnung (7) haben, die sich ausgehend von der Basis der Spitze (4) in radialer Richtung über ungefähr ein Drittel des Bereichs (5) erstreckt.

5. Ohrmarke nach einem der vorhergehenden Ansprüche, **dadurch gekennzeichnet, dass** die Öffnungen (7) der Durchbohrungen (6) zusammengenommen eine Oberfläche haben, die mindestens 3 %, und vorzugsweise mindestens 5 %, der Oberfläche der Unterseite des Bereichs (5) ausmacht, welche dazu bestimmt ist, mit dem Ohr des Tieres in Berührung zu sein.

6. Ohrmarke nach einem der vorhergehenden Ansprüche, **dadurch gekennzeichnet, dass** die Spitze (4) des Knopfes (1) darüber hinaus mindestens ein Loch (8) aufweist, sodass der Hohlraum (3) unmittelbar der Umgebungsluft ausgesetzt ist.

7. Ohrmarke nach dem vorhergehenden Anspruch, **dadurch gekennzeichnet, dass** die Spitze (4) des Kopfes (1) zwei oder drei Spalten (9) aufweist, die in gleichen Abständen angeordnet und parallel zur Achse der Spitze (4) ausgerichtet sind.

8. Ohrmarke nach dem vorhergehenden Anspruch, **dadurch gekennzeichnet, dass** die Innenwand der Spitze (4) des Knopfes (1) in der Nähe jeder der Spalten eine Ausnehmung (10) aufweist, sodass sich das Luftvolumen vergrößert, welches in dem Hohlraum vorliegt.

9. Ohrmarke nach einem beliebigen der Ansprüche 1 bis 8, **dadurch gekennzeichnet, dass** der Knopf (1) aus zwei Schalen (11, 12) besteht, die aneinandergefügt sind, wobei sie dieselbe Anzahl von Durchbohrungen (6) aufweisen, welche an denselben Stellen auf dem kreisförmigen Bereich (5) angeordnet sind.

10. Ohrmarke nach einem beliebigen der Ansprüche 1 bis 8, **dadurch gekennzeichnet, dass** der Knopf (1) als einstückiges Formteil ausgebildet ist.

11. Ohrmarke nach einem der vorhergehenden Ansprüche, **dadurch gekennzeichnet, dass** der kreisförmige Bereich (5) darüber hinaus Mittel aufweist, die einen Code zur Kennzeichnung eines Tieres tragen.

12. Ohrmarke nach einem der vorhergehenden Ansprüche, **dadurch gekennzeichnet, dass** sie einen elektronischen Transponder (RFID) enthält.

## Claims

1. Ear loop for marking and identifying livestock, combining - with a male part - a female part that consists of a button (1) that has a channel (2) and a cavity (3) for receiving the male part, said button comprising an essentially cylindrical or tapered top (4) and a circular surface (5) that extends in a plane that is essentially perpendicular to the axis of the top from the base of the latter, the loop being **characterized in that** the surface (5) of the receiving button (1) comprises at least two perforations (6) that are made perpendicular to the base of the top (4), connecting the lower face of said surface to the atmosphere.

2. Ear loop according to claim 1, **characterized in that** the circular surface (5) comprises at least four perforations (6), and preferably at least six perforations (6).

3. Ear loop according to claim 1 or 2, **characterized in that** the perforations (6) are distributed at regular intervals over the circular surface (5).

4. Ear loop according to one of the preceding claims, **characterized in that** the perforations (6) have an orifice (7) that extends radially over approximately one third of the surface (5) starting from the base of the top (4).

5. Ear loop according to one of the preceding claims, **characterized in that** the orifices (7) of the perforations (6) have a cumulative surface of at least 3%, and preferably at least 5%, relative to the surface of the lower face of the surface (5) that is designed to be in contact with the animal's ear.

6. Ear loop according to one of the preceding claims, **characterized in that** the top (4) of the button (1) also comprises at least one opening (8) that puts the cavity (3) in direct connection to the outside atmosphere.

7. Ear loop according to the preceding claim **characterized in that** the top (4) of the button (1) comprises two or three equidistant slots (9) that are oriented parallel to the axis of the top (4).

8. Ear loop according to the preceding claim, **characterized in that** the inside wall of the top (4) of the button (1) has a recess (10) that is close to each of said slots so as to increase the volume of air that is present in the cavity.

9. Ear loop according to any one of claims 1 to 8, **characterized in that** the button (1) consists of two shells (11, 12) that are assembled on one another and that comprise the same number of perforations (6) placed at the same locations on the circular surface (5).

10. Ear loop according to any one of claims 1 to 8, **characterized in that** the button (1) consists of an integrally molded single part.

11. Ear loop according to one of the preceding claims, **characterized in that** the circular surface (5) also comprises means for support of an identification code of an animal.

12. Ear loop according to one of the preceding claims, **characterized in that** it contains an electronic transponder (RFID).
